# EUROPEAN PATENT APPLICATION

(11) **EP 4 700 925 A1**
(43) Date of publication of application: **25.02.2026**
(21) Application number: 25187230.5
(22) Date of filing: 03.07.2025
(51) Int. Cl.: H01M 50/107, H01M 50/152, H01M 50/533, H01M 50/536, H01M 50/538

(54) **SECONDARY BATTERY, BATTERY PACK, AND ELECTRONIC DEVICE**

(30) Priority: 21.08.2024 CN 202422039963 U
(71) Applicant: AESC Japan Ltd., Yokohama-Shi, Kanagawa 220-0012 (JP)
(72) Inventor: CHEN, Xiu, Jiangyin City, Wuxi City, 214443 (CN)
(74) Representative: Becker, Eberhard

(57) **Abstract**

The disclosure provides a secondary battery (100), a battery pack (1002), and an electronic device (1000). The secondary battery (100), including a shell including a shell body (200) with an opening (113) formed at one end thereof and a cover plate (140) covering the opening (113) and connected to the shell body (200); an electrode assembly (120) accommodated in the shell body (200) and including a tab facing the cover plate (140); a current collecting component (130) including a connector piece (10) welded to the tab, and a welding block (20) surrounding the connector piece (10), the welding block (20) is provided with a first step structure (21), an edge portion (12) of the connector piece (10) is matched and connected with the first step structure (21), and the welding block (20) is welded to the shell.

## Description

### BACKGROUND OF THE INVENTION

### Field of the Invention

The disclosure relates to a secondary battery, a battery pack, and an electronic device.

### Description of Related Art

In the field of new energy power batteries, secondary batteries generally include an electrode assembly, a shell, a current collecting plate, etc. The electrode assembly includes a positive electrode sheet, a negative electrode sheet, and a separator located between the positive electrode sheet and the negative electrode sheet. The positive electrode sheet, the negative electrode sheet, and the separator are stacked with each other and wound into an electrode assembly, and then the electrode assembly is encapsulated in the shell. A secondary battery usually has a current collecting component disposed near the location of the opening of the shell body, so that one end of the current collecting component is welded to the shell body or the end cover and another end of the current collecting component is electrically connected to the tab of the electrode assembly, thereby achieving electrical connection between the shell body and the electrode assembly.

### SUMMARY OF THE INVENTION

In view of the issues existing in the prior art, the disclosure aims to provide a secondary battery, a battery pack, and an electronic device, so as to at least realize precise positioning between a welding block of a current collecting component and a connector piece.

In order to achieve the above object, the disclosure provides a secondary battery, including: a shell including a shell body and a cover plate, an opening is formed at one end of the shell body, the cover plate covers the opening and is connected to the shell body; an electrode assembly accommodated in the shell body, the electrode assembly includes a tab facing the cover plate; a current collecting component including a connector piece welded to the tab, and a welding block surrounding the connector piece, the welding block is provided with a first step structure, an edge portion of the connector piece is matched and connected with the first step structure by welding, and the welding block is welded to the shell.

In some embodiments, the welding block is welded to the cover plate, and in a thickness direction of the cover plate, a thickness of the welding block is greater than the thickness of the cover plate; or/and the welding block is welded to the shell body, and in a thickness direction of the shell body, the thickness of the welding block is greater than a thickness of the sidewall of shell body.

In some embodiments, the welding block is welded to the cover plate, and the welding block and the cover plate are a same type of material; or/and the welding block is welded to the shell body, and the welding block and the shell body are a same type of material.

In some embodiments, the connector piece is located between the first step structure and the cover plate, a weld mark between the connector piece and the welding block faces the cover plate, and an end surface of the welding block facing the cover plate exceeds the edge portion of the connector piece along a direction from the current collecting component to the cover plate; or the connector piece is located between the first step structure and the electrode assembly, the weld mark between the connector piece and the welding block faces the electrode assembly, and the end surface of the welding block facing the electrode assembly exceeds the edge portion of the connector piece along a direction from the current collecting component to the electrode assembly.

In some embodiments, the welding block includes a second step structure connected to the first step structure and the end surface.

In some embodiments, the welding block has a groove recessed away from the edge portion of the connector piece at a corner of the first step structure.

In some embodiments, the connector piece has a main body portion connected to the tab and a bending portion disposed between the main body portion and the edge portion, and the bending portion makes the main body portion protrude toward the electrode assembly relative to the edge portion.

In some embodiments, the edge portion of the connector piece is located between the welding block and an end cover.

In some embodiments, the first step structure is connected to the end surface of the welding block, the end surface faces the electrode assembly, and the end surface is flush with a surface of the connector piece facing the electrode assembly.

An embodiment of the present application further provides a battery pack including any of the above secondary batteries.

An embodiment of the present application further provides an electronic device including the above battery pack.

The beneficial technical effects of the invention are:
An embodiment of the present application provides a welding block having an annular first step structure, wherein the first step structure is matched with the edge portion of the transition piece so that the transition piece is overlapped with the first step structure, thereby achieving precise positioning between the welding block and the transition piece. This positioning method involves simple assembly and has high feasibility for mass production.

### BRIEF DESCRIPTION OF THE DRAWINGS

In order to more clearly explain the technical solutions in the embodiments of the present application or prior art, the following briefly introduces the figures required in the description of the embodiments or prior art. Obviously, the figures in the following description are some embodiments of the present application. For those of ordinary skill in the art, without inventive-step effort, other figures may be obtained based on these figures.
FIG. 1 shows a schematic diagram of a case in which the electronic device according to an embodiment of the present application is a vehicle.
FIG. 2 shows a perspective view of a secondary battery according to an embodiment of the present application.
FIG. 3 shows a front view of a secondary battery.
FIG. 4 shows a cross-sectional view taken along line AA of FIG. 3.
FIG. 5 shows an enlarged view of the B region in FIG. 4.
FIG. 6 shows a cross-sectional perspective view of a portion of a secondary battery according to an embodiment of the present application.
FIG. 7 shows a front view of a current collecting component.
FIG. 8 shows a cross-sectional view taken along line CC of FIG. 7.
FIG. 9 shows an enlarged view of the D region in FIG. 8.
FIG. 10 shows a cross-sectional perspective view of a portion of a secondary battery according to an embodiment of the present application.
FIG. 11 shows an enlarged view of the I region in FIG. 10.
FIG. 12 shows a perspective view of a current collecting component.
FIG. 13 shows a front view of a current collecting component.
FIG. 14 shows a cross-sectional view taken along line GG of FIG. 13.
FIG. 15 shows an enlarged view of the H region in FIG. 14.
FIG. 16 shows a cross-sectional perspective view of a portion of a secondary battery according to an embodiment of the present application.
FIG. 17 shows a front view of a current collecting component.
FIG. 18 shows a cross-sectional view taken along line EE of FIG. 17.
FIG. 19 shows an enlarged view of the F region in FIG. 18.

### DESCRIPTION OF THE EMBODIMENTS

In order to better understand the spirit of the embodiments of the present application, some preferred embodiments of the present application are further described below.

The embodiments of the present application are described in detail below. Throughout the specification of the present application, the same or similar components and components having the same or similar functions are denoted by similar reference numerals. The embodiments described herein with respect to the accompanying drawings are illustrative, diagrammatic, and are intended to provide a basic understanding of the present application. The embodiments of the present application should not be interpreted as limiting the present application.

As used herein, the terms "substantially," "essentially," "mainly," and "about" are used to describe and account for minor variations. When used in connection with an event or circumstance, the term may refer to instances in which the event or the circumstance occurred exactly and instances in which the event or the circumstance occurred closely.

In this specification, unless otherwise specified or limited, relative words such as "central", "longitudinal", "lateral", "front", "rear", "right", "left", "inner", "outer", "lower", "higher", "horizontal", "vertical", "higher than", "less than", "above", "below", "top", "bottom", and derivative words thereof (such as "horizontally", "downwardly", "upwardly", etc.) should be interpreted as referring to the directions described in the discussion or illustrated in the accompanying drawings. These relative terms are used only for convenience of description and do not require that the present application be constructed or operated in a specific direction.

For convenience of description, "first", "second", "third", etc. may be used herein to distinguish different components in one figure or a series of figures. "First", "second", "third", etc., are not intended to describe corresponding components.

The cover plate and the shell body of the secondary battery of the prior art are welded together. In a large cylindrical battery, the negative electrode current collecting plate connected to the negative tab is welded to the cover plate, and the current path passes through the current collecting plate to the cover plate to the shell body, so that the shell body is negatively charged. The thickness of the current collecting plate of the prior art is generally 0.2 mm, and the material is usually copper-plated nickel. The cover plate and the current collecting plate are welded by laser penetration welding. The laser is shot from the outside of the cover plate to the inside of the cover plate, penetrates the cover plate, and reaches the current collecting plate for welding. The thickness of the cover plate is usually 0.6 mm, and the material is usually steel. Since the cover plate is thicker, a higher energy laser is needed for welding. However, since the thickness of the current collecting plate is less, the laser may directly penetrate the current collecting plate, and then directly damage the tab of the electrode assembly, the active material, etc., and the secondary battery is at risk of being scrapped.

At present, the industry solves this issue by using a composite current collecting plate. The composite current collecting plate includes a thickened welding block and a current collecting plate body. The thickened welding block is not readily penetrated when welded to the cover plate. The welding block and the current collecting plate body are compounded by welding. If the weld mark between the welding block and the current collecting plate body faces the cover plate, since the welding surface is not completely flat, the weld mark may be expanded and bulged out. Then, when the weld mark is matched with the cover plate, the bulging weld mark may interfere with the cover plate, resulting in a gap between the compound current collecting plate and the cover plate, thus causing poor welding between the cover plate. If the weld mark between the welding block and the current collecting plate body faces the tab of the electrode assembly, the tab is damaged. In addition, the weld mark forms some bubbles. If the secondary battery is vibrated, welding slag may fall off. The welding slag falls into the electrode assembly and punctures the tab. In addition, there is no positioning structure between the welding block and the current collecting plate body in some embodiments of the prior art, which makes the process more difficult to implement and may cause eccentricity during welding. The positioning structures of some other embodiments of the prior art are difficult to be assembled and more difficult to industrialize. In addition, the welding block and the current collecting plate body are not welded but only mechanically matched, resulting in greater contact resistance.

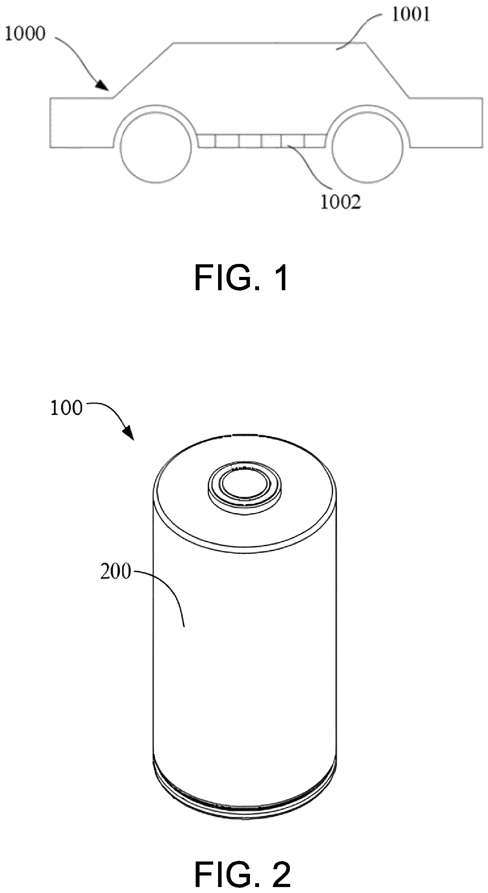

The disclosure provides an electronic device 1000. For the convenience of description, the following embodiments are described by taking the electronic device 1000 as a vehicle as an example. Referring to FIG. 1, a battery pack 1002 is disposed inside the vehicle. The battery pack 1002 may be disposed at the bottom, the head, or the tail of a vehicle body 1001. The battery pack 1002 may be used to power the vehicle. For example, the battery pack 1002 may be used as an operating power source for the vehicle. The working portion of the electronic device 1000 is electrically connected to the battery pack 1002 to obtain electrical energy support. The vehicle may be a fuel vehicle, a gas vehicle, or a new energy vehicle. The new energy vehicle may be a pure electric vehicle, a hybrid vehicle, or an extended-range vehicle, etc., but is not limited thereto. The working portion is the vehicle body, and the battery pack 1002 is disposed at the bottom of the vehicle body and provides electric energy support for the driving of the vehicle or the operation of the electrical elements in the vehicle. However, in some other embodiments, the electronic device 1000 may also be a mobile phone, a portable device, a laptop computer, a ship, a spacecraft, an electric toy, an electric tool, and the like. The spacecraft includes an airplane, a rocket, a space shuttle, and a spacecraft, etc.; the working portion may obtain the electric energy of the battery pack 1002 and perform corresponding work as a unit component, such as a fan blade rotation unit of a fan, a vacuum work unit of a vacuum cleaner, etc. The electric toy includes a fixed or mobile electric toy, such as a game console, an electric car toy, an electric ship toy, and an electric airplane toy, etc.; the electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer, etc. An embodiment of the present application does not impose any special limitation on the electronic device 1000.

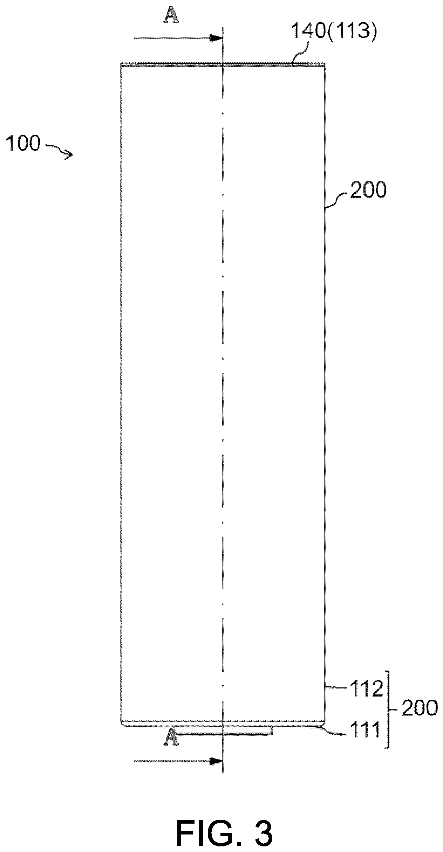

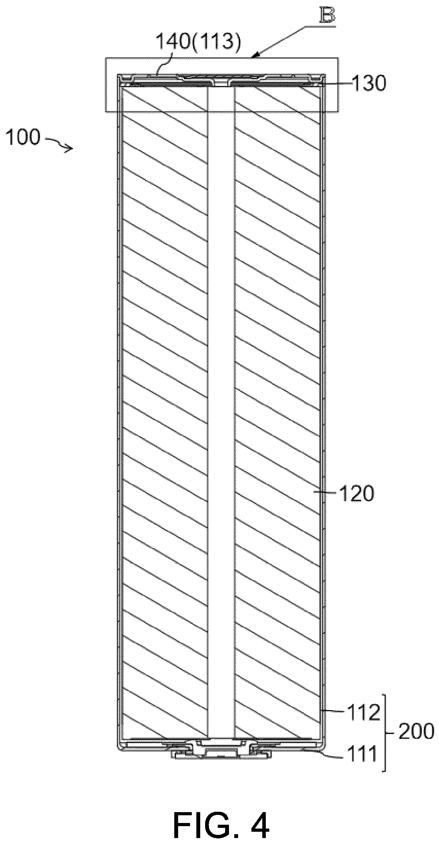

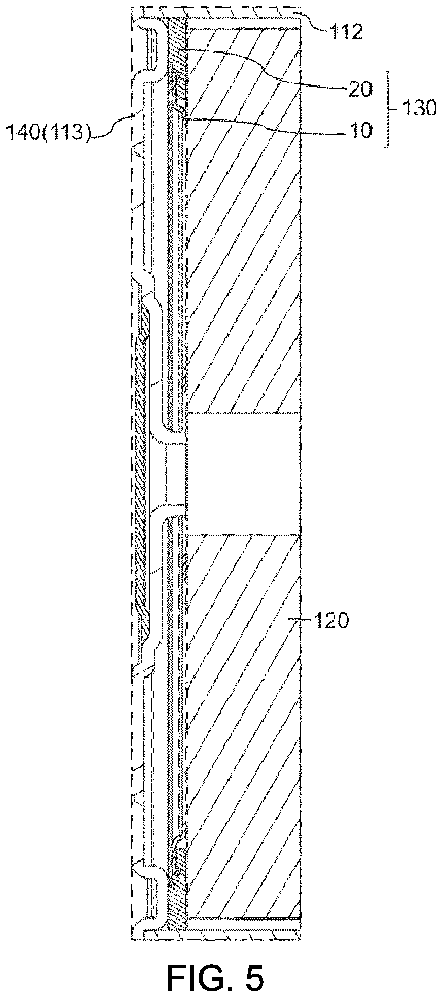

FIG. 2 shows a perspective view of a secondary battery 100 according to an embodiment of the present application. FIG. 3 shows a front view of the secondary battery 100. FIG. 4 shows a cross-sectional view taken along line AA of FIG. 3. FIG. 5 shows an enlarged view of the B region in FIG. 4. An embodiment of the present application provides the secondary battery 100. The secondary battery 100 includes a shell, an electrode assembly 120 located in the shell, and a current collecting component 130. The shell includes a shell body 200 and a cover plate 140. The shell body 200 includes a sidewall 112, and an opening 113 is formed at one end of the sidewall 112. The cover plate 140 covers the opening 113 and is connected to the sidewall 112; the electrode assembly 120 is accommodated in the shell body 200, and the electrode assembly 120 includes a tab (for example, a negative electrode tab) facing the opening 113 and the cover plate 140. The material of the current collecting component 130 is copper, and nickel may be plated on the surface of the copper. The material of the cover plate 140 is stainless steel or nickel-plated steel.

As long as a stable sealing and electrical connection relationship may be formed, the connection between an end wall 111 and the sidewall 112 may be achieved in a variety of ways, such as integral stamping, integral casting, or split welding. The shape of the sidewall 112 is not limited, and may be cylindrical or prismatic, or may be along any other closed loop contour that may match the end wall. An accommodating cavity is formed in the shell body 200 for accommodating the electrode assembly 120, electrolyte, lower plastic, the current collecting component 130, and other necessary battery components. Specifically, the diameter of the shell body 200 may be determined according to the specific size of the electrode assembly. The shell body 200 may be made of a variety of materials, such as copper, iron, aluminum, steel, aluminum alloy, conventional cold-rolled carbon steel sheet and steel strip with a grade of SPCC, etc. In order to prevent the shell body 200 from rusting during long-term use, a layer of rust-proof material such as metal nickel may further be plated on the surface of the shell body 200. The secondary battery 100 may be a cylindrical battery. For example, the cylindrical battery is a 4680 cylindrical battery with a height of 80 mm and a diameter of 46 mm; or for another example, a cylindrical battery with a height of 15 mm and a diameter of 46 mm.

The electrode assembly is a component in the secondary battery 100 in which an electrochemical reaction occurs. One or a plurality of electrode assemblies may be contained within the shell body 200. The electrode assembly is a wound or laminated electrode assembly including a stacked and/or wound positive electrode sheet, a first separator, a negative electrode sheet, and a second separator. The positive electrode sheet includes a positive electrode current collecting plate and a positive electrode active material layer coated on the positive electrode current collecting plate. A first coated area coated with the positive electrode active material layer and a first uncoated area not coated with the positive electrode active material layer are formed on the positive electrode current collecting plate. The first coated area and the first uncoated area are arranged along the height direction of the electrode assembly. The first uncoated area is extended to the outside of the separator at one end in the height direction of the secondary battery 100 and forms a bent positive electrode tab. The negative electrode plate includes a negative electrode current collecting plate and a negative electrode active material layer coated on the negative electrode current collecting plate. A second coated area coated with the negative electrode active material layer and a second uncoated area not coated with the negative electrode active material layer are formed on the negative electrode current collecting plate. The second coated area and the second uncoated area are arranged along the height direction of the electrode assembly. The second uncoated area is also extended to the outside of the separator at one end in the height direction of the secondary battery 100 to form a bent negative electrode tab. The first separator and the second separator are disposed between the positive electrode plate and the negative electrode plate to isolate the positive electrode active material layer and the negative electrode active material layer. Taking the lithium-ion secondary battery 100 as an example, the material of the positive electrode current collecting plate may be aluminum, the positive electrode active material layer includes a positive electrode active material, and the positive electrode active material may be, for example, lithium cobalt oxide, lithium iron phosphate, ternary lithium, or lithium manganese oxide. The material of the negative electrode current collecting plate may be copper, and the negative electrode active material layer includes a negative electrode active material, and the negative electrode active material may be, for example, carbon or silicon. The base material of the first separator and the second separator may be, for example, PP (polypropylene) or PE (polyethylene). In order to protect and insulate the electrode assembly, an insulating film may further be coated on the outside of the electrode assembly. The insulating film may be synthesized from PP, PE, PET, PVC, or other high molecular polymer materials.

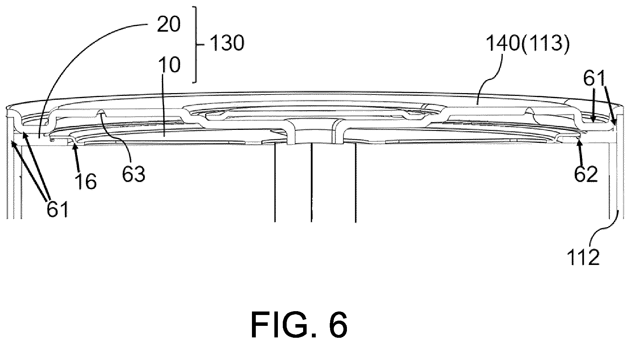

FIG. 6 to FIG. 9, FIG. 10 to FIG. 15, and FIG. 16 to FIG. 19 respectively show the current collecting component 130 according to the first embodiment to the third embodiment of the present application.

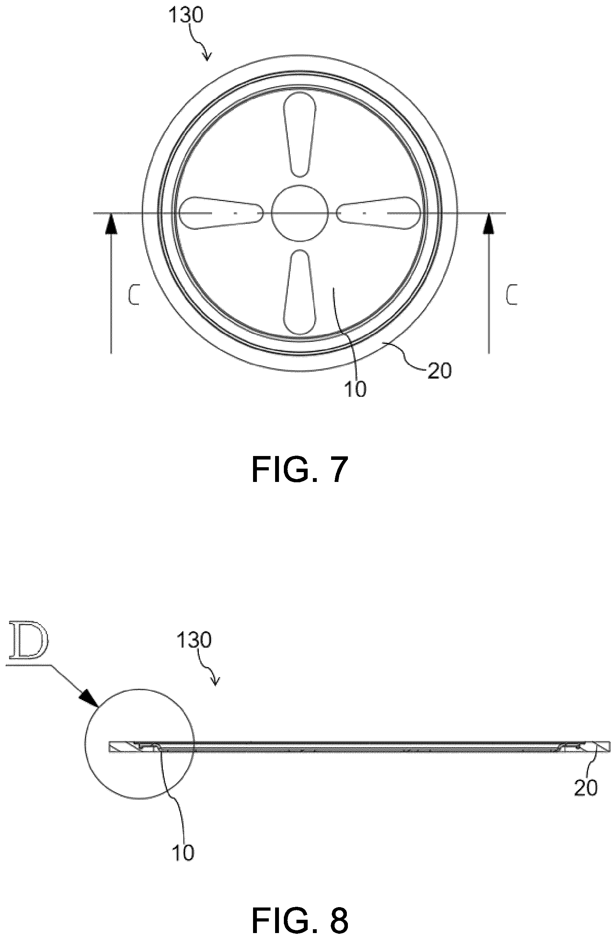

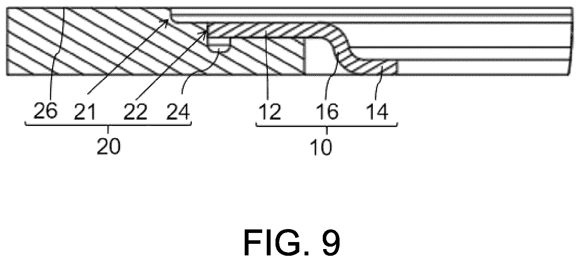

For the first embodiment, FIG. 6 shows a cross-sectional perspective view of a portion of the secondary battery 100 according to an embodiment of the present application, showing the match among the current collecting component 130, the housing 200, and the cover plate 140, FIG. 7 shows a front view of the current collecting component 130, FIG. 8 shows a cross-sectional view taken along CC line of FIG. 7, FIG. 9 shows an enlarged view of the D region in FIG. 8, the current collecting component 130 includes the connector piece 10 and the welding block 20, the connector piece 10 is used for welding with the tab of the electrode assembly 120, the welding block 20 is used for welding with the shell, the welding block 20 surrounds the connector piece 10, the welding block 20 is provided with a first step structure 21 matching the edge portion 12 of the connector piece 10, the edge portion 12 and the first step structure 21 are connected together by welding, an embodiment of the present application provides the welding block 20 having an annular first step structure 21, and the first step structure 21 is matched with the edge portion 12 of the connector piece 10 so that the connector piece 10 is overlapped on the first step structure 21, thereby achieving precise positioning between the welding block 20 and the connector piece 10. In addition, this positioning method involves simple assembly and has high feasibility for mass production. The welding block 20 and the connector piece 10 are welded together at a position where the two are in contact with each other, and the contact resistance is less.

Referring to FIG. 6, at the position indicated by an arrow 61, the welding block 20 is welded to the cover plate 140 and/or the sidewall 112, and the welding form is, for example, laser penetration welding. In the welding direction, the thickness of the welding block 20 is greater than the thickness of the cover plate 140 and/or the sidewall 112, the process window of the welding is large, the welding block 20 is not readily penetrated, and the welding yield of the product is high. That is, when the welding block 20 is welded to the cover plate 140, the welding is performed in the thickness direction (i.e., the up and down direction shown in FIG. 6) of the cover plate 140, and the thickness of the welding block 20 is greater than the thickness of the cover plate 140. When the laser is struck from the outside to the inside of the cover plate 140, the thickness of the welding block 20 is greater and the welding block 20 is not penetrated by the laser; when the welding block 20 is welded to the sidewall 112, the welding is performed in the thickness direction (i.e., the radial direction shown in FIG. 6) of the sidewall 112 of the shell body 200, and the radial thickness of the welding block 20 is greater than the thickness of the sidewall 112. When the laser is struck from the outside to the inside of the sidewall 112, the thickness of the welding block 20 is greater and the welding block 20 is not penetrated by the laser. The welding block 20 is welded to the cover plate 140 and/or the sidewall 112 at the edge position as shown by the arrow 61, and the cover plate 140 and the current collecting component 130 are connected in parallel for current flow, the current does not pass through an explosion-proof valve 63, and the current flow path is short, and therefore direct current resistance (DCR) is small and heat generation is also small. The explosion-proof valve 63 may be a continuous annular structure or a discontinuous structure. The explosion-proof valve 63 is located in a region of the cover plate 140 in which the strength is weaker. When the air pressure inside the secondary battery 100 exceeds a certain threshold, the explosion-proof valve 63 is ruptured, and the air pressure inside the secondary battery 100 is discharged from the rupture, thereby preventing the occurrence of lateral heat spread phenomenon to the secondary battery 100 causing more significant consequences. In addition, when the welding block 20 and the cover plate 140 or/and the shell body 200 welded thereto are of different types of materials, the quality of the welding molten pool is poor and welding strength is less. Therefore, in order to improve welding quality, when the welding block 20 is welded to the cover plate 140, the welding block 20 and the cover plate 140 may be set to the same type of material, when the welding block 20 is welded to the shell body 200, the shell body 200 may be set to the same type of material, and when the welding block 20 is welded to the cover plate 140 and the shell body 200, the welding block 20 and the cover plate 140 and the shell body 200 may be set to the same type of material.

Continuing to refer to FIG. 6 to FIG. 9, the connector piece 10 is located between the first step structure 21 and the cover plate 140, the thickness of the welding block 20 is greater than the thickness of the connector piece 10, and the connector piece 10 and the welding block 20 are butt-welded at the position indicated by an arrow 62, for example, so that the weld mark between the two faces the cover plate 140. If the welding slag falls due to vibration or the like, the welding slag does not fall into the electrode assembly 120 below, thereby avoiding damage to the electrode assembly 120 and improving the safety of the secondary battery 100.

Referring to FIG. 9, an end surface 26 of the welding block 20 facing the cover plate 140 exceeds the edge portion 12 of the connector piece 10. The welding block 20 also includes a second step structure 22 connected to the first step structure 21. Along the direction from the current collecting component 130 to the cover plate 140, the second step structure 22 exceeds the edge portion 12 of the connector piece 10. Therefore, the first step structure 21 and the connector piece 10 may be separated from the cover plate 140, leaving space for the protrusion of the weld mark formed between the first step structure 21 and the connector piece 10. The weld mark does not interfere with the cover plate 140, thereby avoiding affecting the welding between the welding block 20 and the cover plate 140. In some other embodiments, the second step structure 22 may be omitted, and the weld marks between the cover plate 140 and the welding block 20 and the connector piece 10 may be blocked by increasing the depth of the first step structure 21. The depth of the first step structure 21 may be different from the thickness of the connector piece 10 (when the second step structure 22 is not included, the depth of the first step structure 21 is greater than the thickness of the connector piece 10, when the second step structure 22 is included, the depth of the first step structure 21 may be greater than or less than the thickness of the connector piece 10, as long as the end surface 26 exceeds the edge portion 12 of the connector piece 10), and the sidewall of the edge portion 12 of the connector piece 10 may not be in contact with the first step structure 21. As long as the two may be matched, the precise positioning of the connector piece 10 may be achieved. When the two shapes fit together as shown in FIG. 9, that is, the depth of the first step structure 21 is the same as the thickness of the connector piece 10, and the sidewall of the edge portion 12 of the connector piece 10 is in contact with the first step structure 21, the butt welding between the two may be better achieved.

The welding block 20 has a groove 24 recessed away from the edge portion 12 of the connector piece 10 at the corner of the first step structure 21. During the material processing process, the first step structure 21 and the second step structure 22 are very difficult to be processed into a right angle. There is generally a round chamfer at the corner of the step structure (for example, see the second step structure 22). The diameter of the annular step structure at the round chamfer is gradually decreased from top to bottom, resulting in that when the edge portion 12 of the connector piece 10 is matched with the first step structure 21, the edge portion 12 may end on the round chamfer, resulting in a greater gap between the edge portion 12 and the first step structure 21, affecting the welding effect between the two. The portion of the first step structure 21 that would originally form the round chamfer is dug out to form the groove 24, so that the sidewall of the first step structure 21 may be relatively straight, and the diameter of the first step structure 21 remains basically unchanged, so that the first step structure 21 may be more closely matched with the edge portion 12 of the connector piece 10.

Continuing to refer to FIG. 9, the connector piece 10 has a main body portion 14 and a Z-shaped bending portion 16 disposed between the main body portion 14 and the edge portion 12. The main body portion 14 is used for welding with the tab of the electrode assembly 120. The bending portion 16 matches the shape of the welding block 20. The bending portion 16 makes the main body portion 14 protrude toward the electrode assembly 120 relative to the edge portion 12 and does not exceed the edge of the welding block 20 to avoid the current collecting component 130 from occupying too much height space. On the one hand, when the secondary battery 100 is used in cycles, the gas generated inside the electrode assembly 120 is discharged from the tab, and the bending portion 16 may release a portion of the stress on the connector piece 10, reducing the deformation of the connector piece 10, thereby reducing the deformation of the welding contact surface between the connector piece 10 and the welding block 20, thereby reducing the risk of welding mark detachment and improving the stability and the reliability of the electrical connection between the welding block 20 and the connector piece 10; on the other hand, when the connector piece 10 is welded to the welding block 20 and the tab respectively, the welding stresses at different welding positions are transmitted to each other. By providing the bending portion 16, the mutual transmission between the welding stresses may be weakened, and the welding deformation of the connector piece 10 itself may be reduced. Therefore, the risk of weld marks detaching at different welding positions on the connector piece 10 may be further reduced. At the same time, when the secondary battery 100 is subjected to external vibration impact, the bending portion 16 may reduce the deformation of the bending portion 16 at the main body portion 14 and the edge portion 12 by releasing a portion of the deformation, thereby ensuring the stability of the electrical connection between the welding block 20 and the tab.

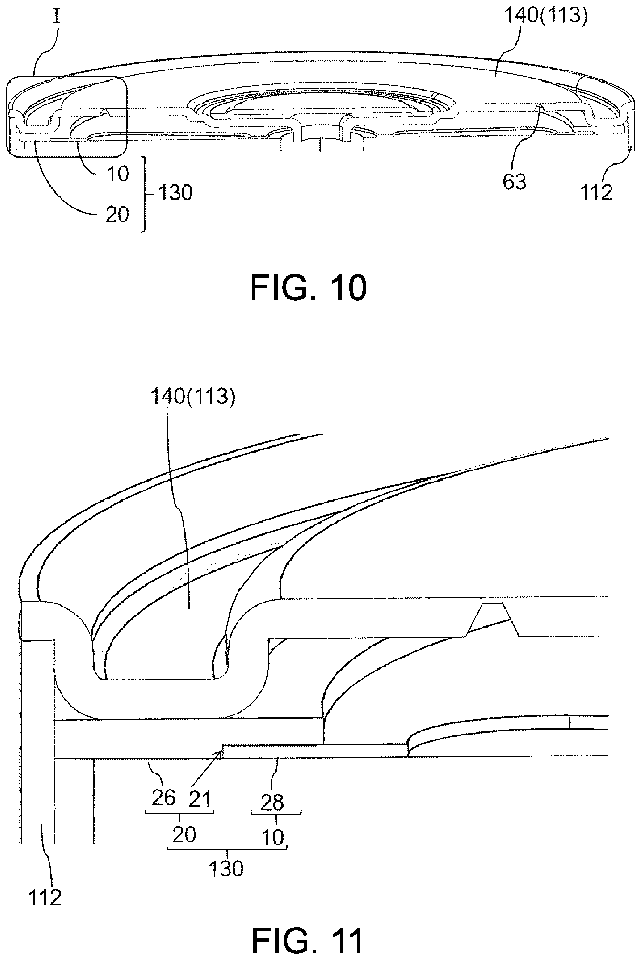

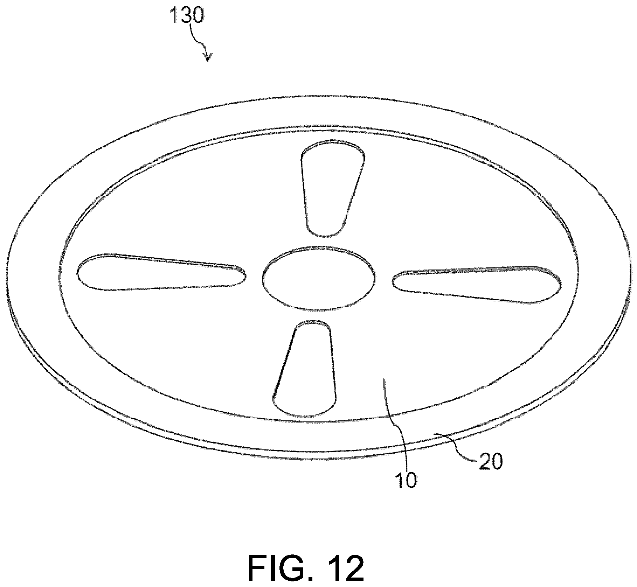

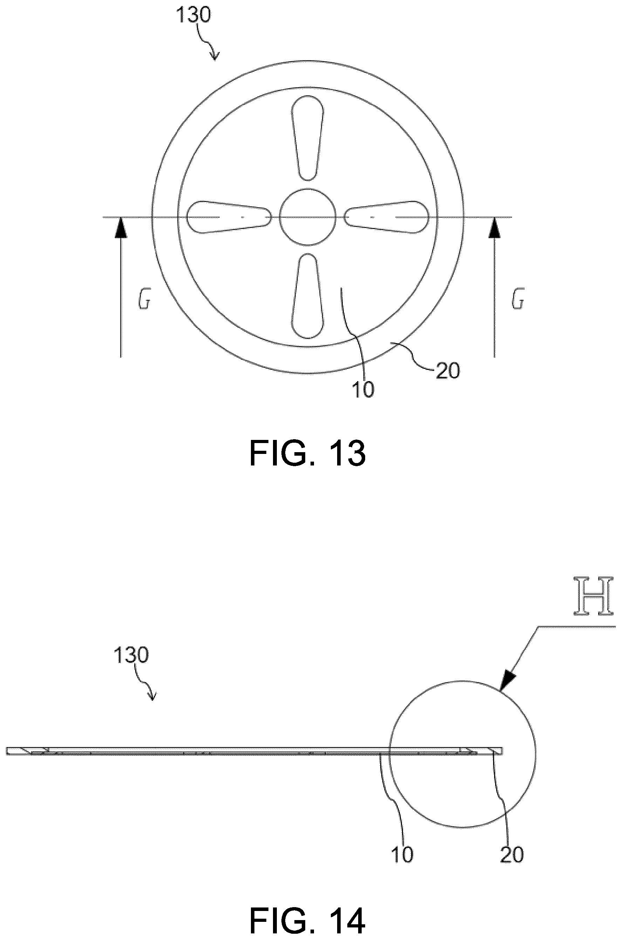

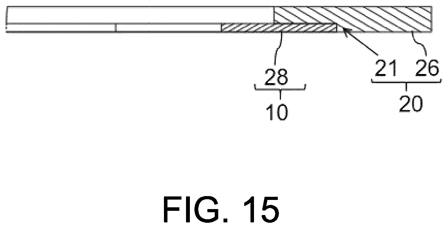

For the second embodiment, FIG. 10 shows a cross-sectional perspective view of a portion of the secondary battery 100 according to an embodiment of the present application, wherein the match among the current collecting component 130, the shell body 200, and the cover plate 140 is shown, FIG. 11 shows an enlarged view of the I region in FIG. 10, FIG. 12 shows a perspective view of the current collecting component 130, FIG. 13 shows a front view of the current collecting component 130, FIG. 14 shows a cross-sectional view taken along the GG line of FIG. 13, and FIG. 15 shows an enlarged view of the H region in FIG. 14. Referring to FIG. 11, compared with the first embodiment, the difference of the second embodiment is that the connector piece 10 of the second embodiment is flat as a whole, the welding block 20 also does not include the second step structure 22, the weld mark between the first step structure 21 and the connector piece 10 faces the electrode assembly 120, the first step structure 21 is connected to the end surface 26 of the welding block 20 facing the electrode assembly 120, and the end surface 26 is flush with the surface 28 of the connector piece 10 facing the electrode assembly 120, the current collecting component 130 of the second embodiment as a whole occupies a smaller height in the secondary battery 100, and the height occupied by the second step structure 22 is reduced compared with the first embodiment, the secondary battery 100 of the second embodiment has a higher energy density, and the structure of the current collecting component 130 of the second embodiment is simpler.

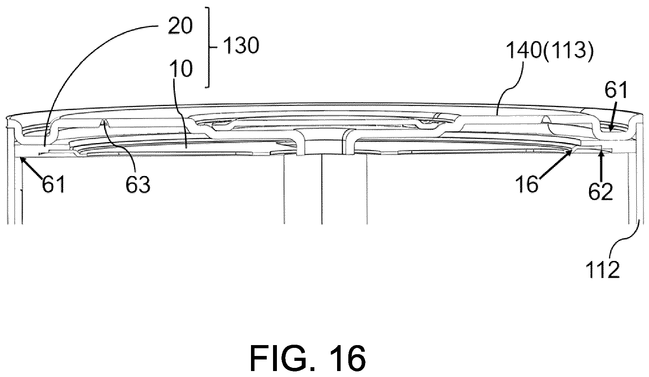

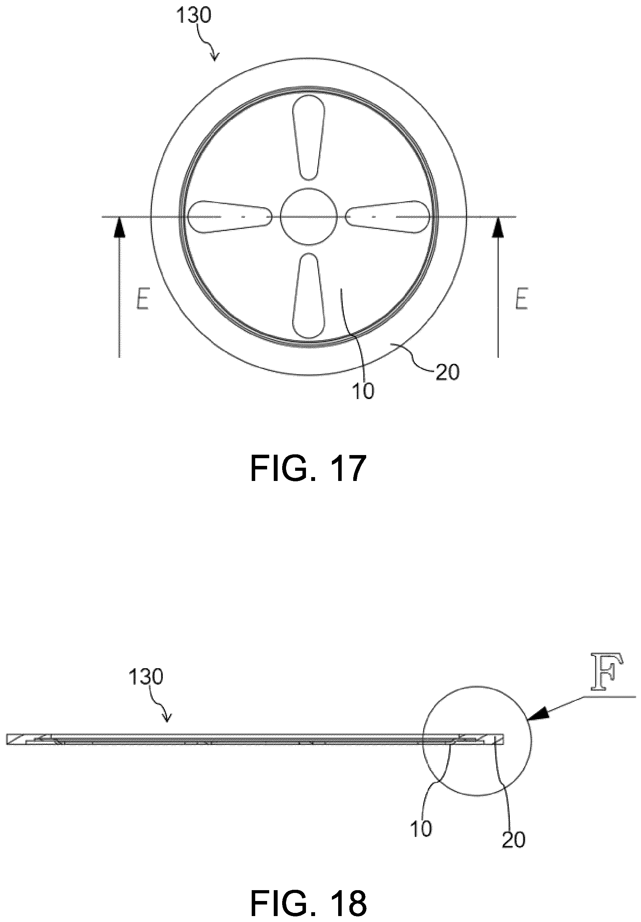

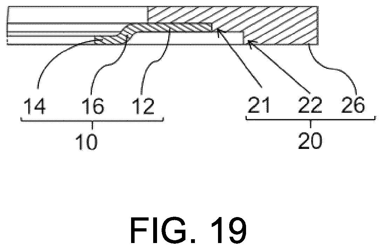

For the third embodiment, FIG. 16 shows a partial cross-sectional perspective view of the secondary battery 100 according to an embodiment of the present application, wherein the match among the current collecting component 130, the shell body 200, and the cover plate 140 is shown, FIG. 17 shows a main view of the current collecting component 130, FIG. 18 shows a cross-sectional view taken along the EE line of FIG. 17, and FIG. 19 shows an enlarged view of the F region in FIG. 18. Compared with the first embodiment, the difference of the third embodiment is that the connector piece 10 is located between the first step structure 21 and the electrode assembly 120, the weld mark of the connector piece 10 and the first step structure 21 of the welding block 20 faces the electrode assembly 120, the end surface 26 of the welding block 20 facing the electrode assembly 120 exceeds the edge portion 12 of the connector piece 10, the welding block 20 includes the second step structure 22 connected to the first step structure 21, along the direction from the current collecting component 130 to the electrode assembly 120, the second step structure 22 exceeds the edge portion 12 of the connector piece 10, after the connector piece 10 and the welding block 20 are compounded together, the above are assembled together with the electrode assembly 120, the second step structure 22 leaves space for the height at which the weld mark may be protruded, so as to separate the weld mark and the electrode assembly 120, avoid the weld mark from damaging the electrode assembly 120, and improve the safety of the secondary battery 100. Similar to the first embodiment, the third embodiment may also not provide the second step structure 22, and the weld mark between the electrode assembly 120 and the welding block 20 and the connector piece 10 may be blocked by increasing the depth of the first step structure 21.

In the first embodiment shown in FIG. 9, the edge portion 12 of the connector piece 10 is located between the welding block 20 and the end cover 140. When the electrode assembly 120 below generates gas and is expanded, the electrode assembly 120 pushes the connector piece 10 upwards. When the bending portion 16 is deformed, the bending portion 16 is not blocked by the welding block 20. Therefore, the buffering effect is better than that of the third embodiment.

Although not shown in the drawings of the second embodiment and the third embodiment, the groove 24 in the first embodiment may also be formed at the corner position of the first step structure 21 of the second embodiment and the third embodiment to reduce the assembly gap between the welding block 20 and the connector piece 10 to facilitate butt welding.

An embodiment of the present application provides the welding block 20 having an annular first step structure 21, wherein the first step structure 21 is matched with the edge portion 12 of the connector piece 10 so that the connector piece 10 is overlapped with the first step structure 21, thereby achieving precise positioning between the welding block 20 and the connector piece 10. This positioning method is simple to assemble and has high feasibility for mass production.

An embodiment of the present application further provides the battery pack 1002 including any of the above secondary batteries 100, and the battery pack 1002 may have the beneficial effects described above with respect to the secondary battery 100.

An embodiment of the present application further provides the electronic device 1000 including the battery pack 1002, and the electronic device 1000 may have the beneficial effects described above with respect to the secondary battery 100 and/or the battery pack 1002.

## Claims

1. A secondary battery (100), **characterized in that** the secondary battery (100) comprising:
a shell comprising a shell body (200) and a cover plate (140), wherein an opening (113) is formed at one end of the shell body (200), and the cover plate (140) covers the opening (113) and is connected to the shell body (200);
an electrode assembly (120) accommodated in the shell body (200), the electrode assembly (120) comprising a tab facing the cover plate (140);
a current collecting component (130) comprising a connector piece (10) welded to the tab and a welding block (20) surrounding the connector piece (10), the welding block (20) is provided with a first step structure (21), an edge portion (12) of the connector piece (10) is matched and connected with the first step structure (21) by welding, and the welding block (20) is welded to the shell.

2. The secondary battery (100) according to claim 1, wherein,
the welding block (20) is welded to the cover plate (140), and in a thickness direction of the cover plate (140), a thickness of the welding block (20) is greater than the thickness of the cover plate (140); or/and
the welding block (20) is welded to the shell body (200), and in a thickness direction of the shell body (200), the thickness of the welding block (20) is greater than a thickness of a sidewall (112) of the shell.

3. The secondary battery (100) according to claim 1 or 2, wherein,
the welding block (20) is welded to the cover plate (140), and the welding block (20) and the cover plate (140) are a same type of material; or/and
the welding block (20) is welded to the shell body (200), and the welding block (20) and the shell body (200) are a same type of material.

4. The secondary battery (100) according to any one of claims 1 to 3, wherein,
the connector piece (10) is located between the first step structure (21) and the cover plate (140), a weld mark between the connector piece (10) and the welding block (20) faces the cover plate (140), and an end surface (26) of the welding block (20) facing the cover plate (140) exceeds the edge portion (12) of the connector piece (10) along a direction from the current collecting component (130) to the cover plate (140); or
the connector piece (10) is located between the first step structure (21) and the electrode assembly (120), the weld mark between the connector piece (10) and the welding block (20) faces the electrode assembly (120), and the end surface (26) of the welding block (20) facing the electrode assembly (120) exceeds the edge portion (12) of the connector piece (10) along a direction from the current collecting component (130) to the electrode assembly (120).

5. The secondary battery (100) according to any one of claims 1 to 4, wherein the welding block (20) comprises a second step structure (22) connected to the first step structure (21) and the end surface (26).

6. The secondary battery (100) according to any one of claims 1 to 5, wherein the welding block (20) has a groove (24) recessed away from the edge portion (12) of the connector piece (10) at a corner of the first step structure (21).

7. The secondary battery (100) according to any one of claims 1 to 6, wherein the connector piece (10) has a main body portion (14) connected to the tab and a bending portion (16) disposed between the main body portion (14) and the edge portion (12), and the bending portion (16) makes the main body portion (14) protrude toward the electrode assembly (120) relative to the edge portion (12).

8. The secondary battery (100) according to any one of claims 1 to 7, wherein the edge portion (12) of the connector piece (10) is located between the welding block (20) and an end cover (140).

9. The secondary battery (100) according to any one of claims 1 to 8, wherein the first step structure (21) is connected to an end surface (26) of the welding block (20), the end surface (26) faces the electrode assembly (120), and the end surface (26) is flush with a surface of the connector piece (10) facing the electrode assembly (120).

10. A battery pack (1002), **characterized in that** the battery pack (1002) comprising the secondary battery (100) in any one of claims 1 to 9.

11. An electronic device (1000), **characterized in that** the electronic device (1000) comprising the battery pack (1002) of claim 10.
